# FASCICULE DE BREVET EUROPEEN

(11) **EP 1 170 525 B1**
(45) Date de publication et mention de la délivrance du brevet: **30.11.2005**
(21) Numéro de dépôt: 01401814.7
(22) Date de dépôt: 06.07.2001
(51) Int. Cl.: F16D 43/08, F16F 15/131

(54) **Dispositif d'amortissement à inertie débrayable pour moteur thermique**
Auskuppelbare Schwungraddämpfungseinrichtung für Brennkraftmaschinen
Disengageable flywheel damping device for internal combustion engines

(30) Priorité: 07.07.2000 FR 0008892
(43) Date de publication de la demande: 09.01.2002
(73) Titulaire: Renault s.a.s., 92100 Boulogne Billancourt (FR)
(72) Inventeur: Aignan, Jean Philippe, 91600 Savigny sur Orge (FR); Vignais, Frédéric, 91400 Orsay (FR)

(56) Documents cités:
- EP-A- 0 592 352
- DE-A- 1 450 208
- DE-A- 3 418 671
- DE-A- 3 627 784
- DE-A- 19 809 425
- JP-A- 56 059 056
- US-A- 4 046 240
- PATENT ABSTRACTS OF JAPAN vol. 006, no. 138 (M-145), 27 juillet 1982 (1982-07-27) & JP 57 061831 A (MAKINO AKIO), 14 avril 1982 (1982-04-14)

## Description

L'invention concerne un dispositif pour réduire l'effet des irrégularités du couple fourni par un moteur thermique de véhicule automobile.

L'invention concerne plus particulièrement un dispositif pour réduire les irrégularités du couple fourni par un moteur thermique de véhicule automobile selon le préambule de la revendication 1.

On connaît de nombreux exemples de dispositifs de ce type.

Les nouveaux développements en matière de motorisation ont abouti à la mise au point de moteurs thermiques susceptibles de fournir des couples importants.

Lorsqu'il fonctionne à un régime de rotation réduit, un tel moteur est susceptible de transmettre à la transmission associée un couple irrégulier résultant des forces de combustions. Ce couple irrégulier présente le double inconvénient d'être pénalisant en terme de confort d'utilisation du véhicule et de solliciter les organes tournants du moteur et de la transmission en fatigue, ce qui peut nuire à terme la fiabilité mécanique du véhicule.

Cet inconvénient est d'autant plus sensible que les récents développements en matière de motorisation conduisent à l'élaboration de moteurs qui sont susceptibles de fournir des couples de plus en plus élevés et de fonctionner à des régimes de ralenti de plus en plus réduits de manière à réduire la consommation en carburant et le niveau sonore à l'intérieur du véhicule. Or, c'est à ces régimes de ralenti réduits que le couple moteur est particulièrement irrégulier.

Pour remédier à cet inconvénient, il est connu d'interposer entre le moteur et la transmission des dispositifs destinés à réduire les irrégularités du couple moteur, notamment des dispositifs comportant au moins un élément rotatif d'inertie qui est agencé entre le moteur et la transmission au niveau du volant moteur. L'augmentation de l'inertie du volant moteur permet de réduire l'intensité des pics d'accélération du vilebrequin.

Toutefois, l'augmentation de l'inertie totale du volant moteur limite également la dynamique d'accélération du véhicule, et ceci de manière plus sensible pour les rapports de rang réduit de la transmission tels que les deuxième et troisième rapports.

De plus, l'augmentation de l'inertie totale du volant moteur provoque une surconsommation de carburant pour les rapports de rang réduit de la transmission tels que les premier et deuxième rapports.

Il est aussi connu de proposer un volant moteur comportant un dispositif connu sous le nom de "double volant amortisseur" ou "DVA". Ce dispositif fonctionne sur le principe de l'accouplement élastique de deux éléments d'inertie. Un premier volant, qui est lié au vilebrequin du moteur, présente l'inertie la plus élevée. Un second volant, qui est lié à l'arbre d'entrée de la transmission, est relié au premier volant par des moyens élastiques. Au delà de la fréquence de résonance du dispositif, le second volant d'inertie est fortement amorti, ce qui permet de réduire les irrégularités de couple moteur en aval du dispositif.

Ce dispositif présente toutefois l'inconvénient, du fait de la présence de la liaison élastique entre le premier et le second volant, de rentrer en résonance pour un régime particulier de rotation du moteur correspondant au démarrage ou à l'arrêt du moteur.

Ainsi, le passage du moteur au régime de résonance peut provoquer un à-coup lors de l'arrêt du moteur, ce qui peut s'avérer désagréable en termes d'acoustique, ou bien provoquer un débattement angulaire élevé du premier volant d'inertie lors du démarrage, notamment lorsqu'il s'agit d'un démarrage prolongé par temps froid, ce qui peut conduire à des dégradations mécaniques du moteur et/ou de la transmission.

De plus, l'inconvénient commun à tous ces dispositifs est qu'il sont intercalés axialement entre le moteur et la transmission, et sont de ce fait particulièrement pénalisants en termes d'encombrement du groupe motopropulseur.

Pour remédier à ces inconvénients, on a proposé dans le document JP-56-059056 un dispositif du type décrit précédemment comportant au moins un volant rotatif d'inertie débrayable en fonction de la vitesse de rotation du moteur.

Dans ce dispositif, le volant d'inertie est monté à rotation coaxialement au volant moteur, et il est susceptible d'être lié en rotation au vilebrequin par l'intermédiaire d'un dispositif d'accouplement centrifuge dans une plage déterminée de

vitesses de rotation du moteur qui correspond à une plage de vitesses de rotation du moteur inférieurs à un valeur de seuil de vitesse.

Ce dispositif comporte le volant moteur et il comporte, d'amont en aval, un volant primaire qui est lié au vilebrequin, le dispositif d'accouplement coaxial centrifuge, et le volant secondaire coaxial d'inertie.

Le dispositif d'accouplement centrifuge comporte des moyens radialement expansibles qui sont agencés entre le volant primaire et le volant secondaire.

L'invention propose un dispositif fonctionnant suivant un autre principe, dans lequel le dispositif d'accouplement centrifuge comporte un disque de friction qui est monté à l'intérieur du volant secondaire, qui est monté libre en coulissement axial et lié en rotation au volant secondaire, qui est pincé axialement entre une face de friction du volant primaire et une face de friction d'un plateau mobile axialement qui est rappelé élastiquement vers le volant primaire, et qui est susceptible d'être écarté de sa position pincée par les moyens expansibles.

Selon d'autres caractéristiques optionnelles de l'invention :
- le plateau mobile est sensiblement annulaire, et il est monté sur un diaphragme élastique dont des lames radiales élastiques sont portées par un moyeu lié au volant primaire et sont susceptibles d'être sollicitées axialement par les moyens expansibles en s'éloignant du volant primaire pour écarter le plateau de sa position de pincement du disque de friction,
- les moyens expansibles comportent une série de billes qui sont prisonnières de logements radiaux d'une cage montée axialement entre une face d'appui du volant primaire et les lames radiales du diaphragme élastique, et qui sont susceptibles de se mouvoir entre une position radiale de repos proche de l'axe du dispositif et une position radiale de centrifugation dans laquelle elles sont susceptibles, lorsque la valeur de vitesse de rotation du moteur est supérieure à la valeur de seuil, de se déplacer radialement vers l'extérieur dans leurs logements pour solliciter en flexion les lames élastiques du diaphragme et écarter ainsi axialement le plateau de sa position de pincement du disque de friction,
- les faces de friction du plateau mobile et du volant primaire sont recouvertes de garnitures de friction.

D'autres caractéristiques et avantages de l'invention apparaîtront à la lecture de la description détaillée qui suit pour la compréhension de laquelle on se reportera aux dessins annexés dans lesquels:
- la figure 1 est une vue en coupe axiale d'un dispositif selon un premier mode de réalisation de l'invention comportant des moyens expansibles à billes ;
- la figure 2 est une vue en coupe par le plan A-A de la figure 1 du dispositif de la figure 1 ;
- la figure 3 est une vue en coupe axiale d'un dispositif conforme à l'état de la technique comportant des moyens expansibles à patins pivotants ; et
- la figure 4 est une vue en coupe par le plan B-B de la figure 3 du dispositif de la figure 3.

Dans la description qui va suivre, des chiffres de référence identiques désignent des pièces identiques ou ayant des fonctions similaires.

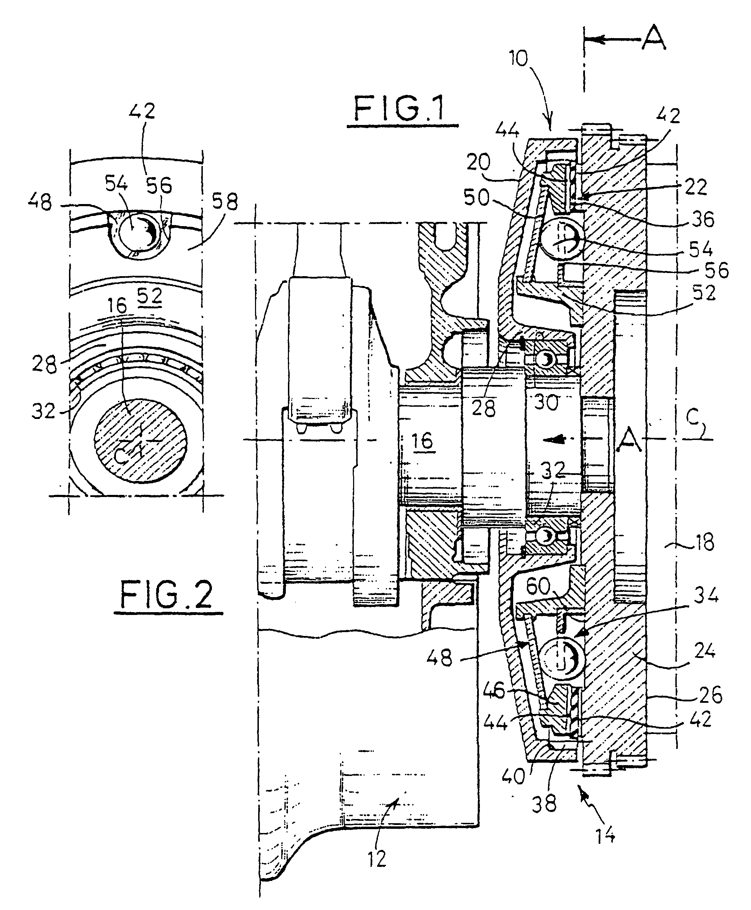

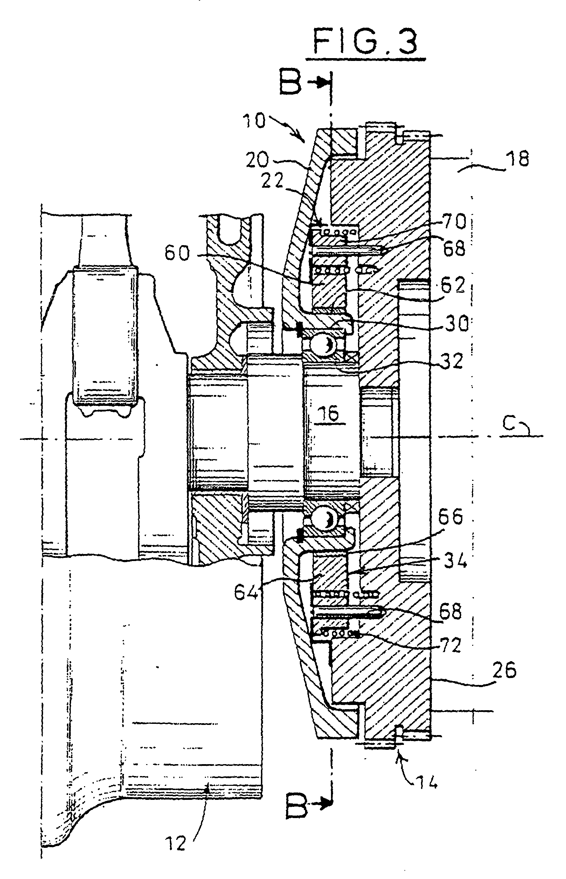

On a représenté à la figure 1 l'ensemble d'un dispositif 10 réalisé selon l'invention et à la figure 3 un dispositif analogue à un dispositif connu de l'état de la technique.

De manière connue, un tel dispositif 10 est destiné à réduire les irrégularités du couple fourni par un moteur thermique 12 de véhicule automobile.

A cet effet, un volant moteur 14, qui est lié au vilebrequin 16 du moteur thermique 12 et qui entraîne un embrayage 18, représenté ici de façon schématique, est susceptible d'être lié en rotation au dispositif 10, c'est à dire notamment à au moins un volant rotatif 20 d'inertie.

Le volant rotatif 20 d'inertie est monté à rotation coaxialement au volant moteur 14, et il est susceptible d'être lié en rotation au vilebrequin 16 par l'intermédiaire d'un dispositif 22 d'accouplement centrifuge dans une plage déterminée de vitesses de rotation du moteur 12.

Le dispositif 10 comporte le volant moteur 14. Plus particulièrement, le dispositif 10 comporte, d'amont en aval suivant l'ordre cinématique de ses éléments, c'est à dire de la droite vers la gauche de la figure 1, un volant primaire 24 qui est lié au vilebrequin 16, le dispositif d'accouplement coaxial centrifuge 22, et un volant secondaire 20 coaxial 20 d'inertie.

Ainsi, le volant primaire 24 est agencé en bout du vilebrequin 16 auquel il est rigidement lié par des moyens connus (non représentés) tels que des vis, et porte sur sa face libre 26 l'embrayage 18, tandis que le volant rotatif 20 d'inertie est traversé par le vilebrequin 16 et est donc agencé entre le volant primaire 24 et le moteur 12. De ce fait, le dispositif 10 forme un ensemble particulièrement compact.

Plus particulièrement, le volant secondaire 20 forme une cloche qui entoure le volant primaire 24. Le volant secondaire 20 est par exemple réalisé à l'aide d'un procédé de fabrication par moulage et/ou forgeage. Il comporte une partie cylindrique 28 centrale dont une gorge intérieure 30 reçoit un palier 32, par exemple un roulement à une rangée de billes à contact radial, qui réalise le montage en rotation du volant secondaire 20 sur le vilebrequin 16. Le dispositif 22 d'accouplement centrifuge comporte des moyens radialement expansibles 34 qui sont agencés intérieurement à la cloche, entre le volant primaire 24 et le volant secondaire 20.

Conformément à l'invention, comme représenté aux figures 1 et 2, le dispositif d'accouplement centrifuge comporte un disque 36 de friction qui est monté à l'intérieur du volant secondaire 20. Le disque 36 de friction est monté libre en coulissement axial dans le volant secondaire 20 et il est aussi lié en rotation au volant secondaire 20. Par exemple, le disque de friction 36 peut comporter sur sa périphérie extérieure des cannelures qui sont complémentaires de cannelures 38 agencées dans un alésage 40 du volant secondaire 20.

Le disque 36 de friction est pincé axialement entre une face 42 de friction du volant primaire 24 et une face 44 de friction d'un plateau 46 qui est mobile axialement à l'intérieur de la cloche que forme le volant secondaire 26 et qui est rappelé vers le volant primaire 24. Le disque 36 de friction est maintenu pressé contre la face 42 de friction du volant primaire 24 par la face de friction 44 du plateau 46, qui est rappelé vers le volant primaire 24 par des moyens de rappel élastique. Le plateau 46 est susceptible d'être écarté de sa position dans laquelle il pince le disque de friction 36 par les moyens expansibles 34.

Le plateau mobile 46 est sensiblement annulaire, et il est à la fois maintenu coaxialement à l'axe C du dispositif 10 et rappelé élastiquement vers le volant primaire 24 par l'intermédiaire d'un diaphragme élastique 48 sur lequel il est monté. Le diaphragme élastique 48 comporte des lames radiales élastiques 50 qui sont portées par un moyeu 52 lié au volant primaire 24. Les lames 50 sont susceptibles d'être sollicitées axialement par les moyens expansibles 34 en s'éloignant du volant primaire 24 pour écarter le plateau 46 de sa position de pincement du disque 36 de friction.

Avantageusement, les faces 44 et 42 de friction du plateau mobile 46 et du volant primaire 24 sont recouvertes de garnitures de friction.

Comme l'illustrent les figures 1 et 2, les moyens expansibles 34 comportent une série de billes 54 qui sont prisonnières des logements radiaux 56 d'une cage 58 qui est montée axialement entre une face d'appui 60 du volant primaire 24 et les lames radiales 50 du diaphragme élastique 48. Les billes 54 sont susceptibles de se mouvoir entre une position radiale de repos proche de l'axe C du dispositif et une position radiale de centrifugation dans laquelle elles s'éloignent de cet axe C.

La plage déterminée de vitesses de rotation du moteur 12 dans laquelle le dispositif d'accouplement centrifuge 22 est embrayé correspond à une plage des vitesses de rotation du moteur 12 qui sont inférieures à une valeur de seuil de vitesse. Le dispositif d'accouplement centrifuge 22 peut donc être débrayée au delà de la valeur déterminée de seuil de vitesse de rotation du moteur 12.

A cet effet, les extrémités extérieures des lames 50 radiales élastiques sont plus proches du volant primaire 24 que ne le sont leurs extrémités intérieures. De la sorte, les lames 50 sont en appui sur le plateau mobile 46 quand les billes 54 sont dans leur position radiale de repos.

De la sorte, lorsque la valeur de la vitesse de rotation du moteur 12 est supérieure à la valeur de seuil, les billes 54, du fait de leur inertie, sont susceptibles, au delà d'une valeur déterminée de seuil du régime moteur, de se déplacer radialement vers l'extérieur dans leurs logements 56 pour solliciter en flexion les lames élastiques 50 du diaphragme 48 et écarter ainsi axialement de sa position de pincement du disque de friction 36 le plateau 46 qui est lié aux lames 50.

Il sera compris que la raideur des lames élastiques 50 et la masse de chaque bille 54 détermine la valeur du seuil de vitesse pour lequel le dispositif d'accouplement centrifuge 22 passe de sa position embrayée de repos à sa position débrayée.

Cette configuration est particulièrement avantageuse car, dans le cadre d'une fabrication en grande série, il est possible d'adapter la vitesse de seuil pour lequel le dispositif 10 est débrayé conformément aux caractéristiques du moteur 12 considéré en choisissant un diaphragme 48 dont les lames 50 ont une raideur déterminée et des billes 54 de masse adéquate.

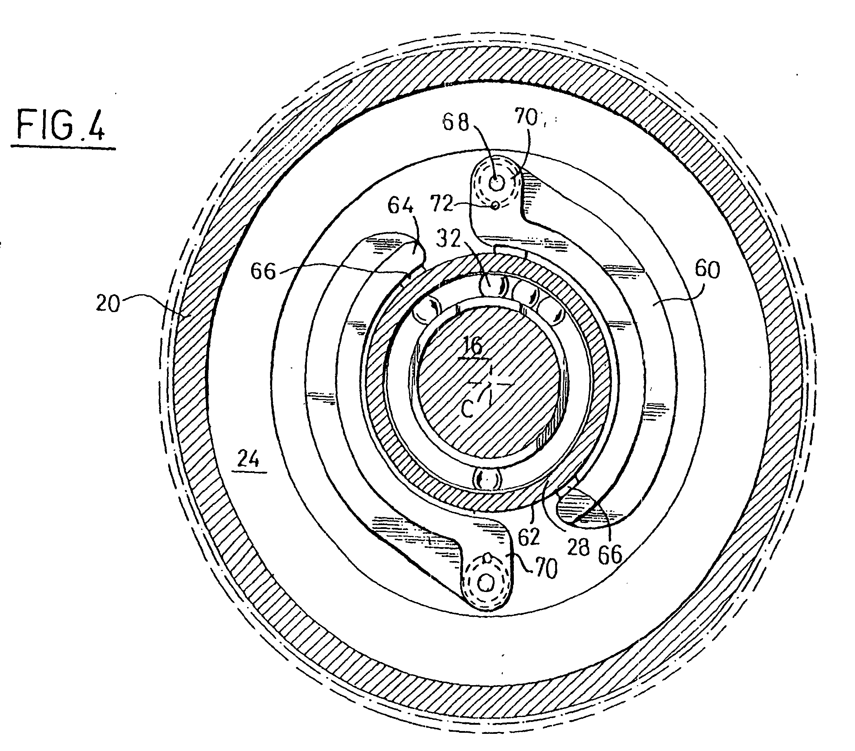

A titre de comparaison, les figures 3 et 4 illustrent un dispositif conforme à l'état de la technique dans lequel les moyens expansibles 34 comportent au moins deux patins 60 solidaires du volant primaire 24, qui sont agencés radialement entre le volant primaire 24 et le volant secondaire 20, qui présentent chacun la forme d'un arc de cercle de courbure sensiblement égale à celle de la portée intérieure cylindrique du volant secondaire de manière à être susceptibles d'embrayer/débrayer le volant secondaire 20 sur le volant primaire 24 en serrant la partie cylindrique 28.

A cet effet, la périphérie extérieure 62 de la partie cylindrique 28 est usinée, par exemple par tournage, de manière à former une surface de friction propre à coopérer avec des extrémités 64 de friction des patins 60 qui sont recouvertes d'une garniture 66 de friction.

L'extrémité 70 de chaque patin 60 qui est opposée à son extrémité 64 de chaque patin 60 est montée pivotante par rapport à un axe 68 excentré du volant primaire 24 autour duquel elle est rappelée par des moyens élastiques. De cette manière, chaque patin 60 est mobile entre une position de repos dans laquelle son extrémité 64 est au contact de la partie intérieure 28 cylindrique de friction du volant secondaire 20 et assure ainsi la liaison du volant secondaire 20 et du volant primaire 24, et une position de centrifugation dans laquelle, lorsque la valeur de vitesse de rotation du moteur est supérieure à la valeur de seuil, l'extrémité 64 de friction du patin 60 quitte la partie cylindrique intérieure 28 du volant secondaire 20 de manière à désaccoupler le volant secondaire 20 du volant primaire 24.

Les moyens élastiques de rappel sont constitués de ressorts 72 hélicoïdaux de torsion.

Ainsi, lorsque la valeur de vitesse de rotation du moteur 12 est supérieure à la valeur de seuil, les patins 60, du fait de leur inertie, sont susceptibles, au-delà d'une valeur déterminée de seuil de vitesse moteur, de pivoter autour de leurs axes 68 pour s'opposer à l'effort de rappel exercé par les ressorts 72, de manière que le volant secondaire 20 ne soit plus lié au volant primaire 24.

La raideur des ressorts 72 de torsion et la masse de chaque patin 60 détermine la valeur du seuil de vitesse pour lequel le dispositif d'accouplement centrifuge 22 passe de sa position embrayée de repos à sa position débrayée.

Cette configuration permet dans le cadre d'une fabrication en grande série, d'adapter la vitesse de seuil pour lequel le dispositif 10 est débrayé conformément aux caractéristiques du moteur 12 considéré en choisissant des ressorts 72 de raideur de torsion déterminée et des patins 60 de masse adéquate.

D'une manière analogue au dispositif conforme à l'état de la technique, le dispositif 10 selon l'invention permet de bénéficier d'un volant moteur comportant une première inertie permanente, qui correspond à l'inertie du volant primaire 24, et une seconde inertie, qui est débrayable, qui correspond à l'inertie du volant secondaire 24, et qui n'est opérante que pour des vitesses de rotation du moteur 12 dont la valeur est inférieure à celle de vitesse de seuil.

A la différence dispositif conforme à l'état de la technique, cette seconde inertie est débrayable axialement.

Ainsi, un moteur 12 équipé d'un tel volant moteur 14 présente l'avantage de fournir un couple régulier à bas régime, du fait de l'action conjointe des première et seconde inerties, et peut de plus être relancé rapidement à haut régime, puisque dans ce cas seule la première inertie intervient, le volant secondaire 20 tournant alors fou sur le vilebrequin sans opposer de couple d'inertie au moteur 12.

## Revendications

1. Dispositif (10) pour réduire les irrégularités du couple fourni par un moteur thermique (12) de véhicule automobile comportant d'une part un volant primaire (24) qui est lié au vilebrequin (16) du moteur et entraîne un embrayage (18) du véhicule et d'autre part un volant d'inertie secondaire (20) coaxial au volant primaire (24) qui est lié au vilebrequin (16) par l'intermédiaire d'un dispositif d'accouplement centrifuge (22), dans une plage déterminée de vitesses de rotation du moteur,qui correspond à une plage de vitesses de rotation du moteur (12) inférieures à une valeur de seuil de vitesse, ledit dispositif (10) comportant, d'amont en aval, le volant primaire (24), le dispositif (22) d'accouplement coaxial centrifuge, et le volant secondaire (20) coaxial d'inertie qui forme une cloche entourant le volant primaire (24), le dit dispositif (22) d'accouplement centrifuge comportant des moyens radialement expansibles (34) qui sont agencés intérieurement à la cloche, entre le volant primaire (24) et le volant secondaire (20),
**caractérisé en ce que** le dispositif (22) d'accouplement centrifuge comporte un disque (36) de friction qui est monté à l'intérieur du volant secondaire (20), qui est monté libre en coulissement axial et lié en rotation au volant secondaire (20), qui est pincé axialement entre une face (42) de friction du volant primaire (24) et une face de friction (44) d'un plateau (46) mobile axialement qui est rappelé élastiquement vers le volant primaire (24), et qui est susceptible d'être écarté de sa position pincée par les moyens expansibles (34).

2. Dispositif (10) selon la revendication précédente, **caractérisé en ce que** le plateau mobile (46) est sensiblement annulaire, et **en ce qu'**il est monté sur un diaphragme élastique (48) dont des lames (50) radiales élastiques sont portées par un moyeu (52) lié au volant primaire (24) et sont susceptibles d'être sollicitées axialement par les moyens expansibles (34) en s'éloignant du volant primaire (24) pour écarter le plateau (46) de sa position de pincement du disque (36) de friction.

3. Dispositif (10) selon la revendication précédente, **caractérisé en ce que** les moyens expansibles (34) comportent une série de billes (54) qui sont prisonnières de logements radiaux (56) d'une cage (58) montée axialement entre une face d'appui (60) du volant primaire (24) et les lames radiales (50) du diaphragme élastique (48), et qui sont susceptibles de se mouvoir entre une position radiale de repos proche de l'axe (C) du dispositif et une position radiale de centrifugation dans laquelle elles sont susceptibles, lorsque la valeur du vitesse de rotation du moteur est supérieure à la valeur de seuil, de se déplacer radialement vers l'extérieur dans leurs logements (56) pour solliciter en flexion les lames élastiques (48) du diaphragme et écarter ainsi axialement le plateau (46) de sa position de pincement du disque (36) de friction.

4. Dispositif (10) selon l'une des revendications 1 à 3, **caractérisé en ce que** les faces de friction (42, 44) du plateau mobile (46) et du volant primaire (24) sont recouvertes de garnitures de friction.

## Patentansprüche

1. Vorrichtung (10) zum Reduzieren der Unregelmäßigkeiten des Moments, welches durch einen Verbrennungsmotor (12) eines Kraftfahrzeugs geliefert wird, aufweisend einerseits ein primäres Schwungrad (24), welches mit der Kurbelwelle (16) des Motors verbunden ist und eine Kupplung (18) des Fahrzeuges antreibt, und andererseits ein sekundäres Trägheitsschwungrad (20) koaxial zum primären Schwungrad (24), welches mit der Kurbelwelle (16) über eine zentrifugale Kopplungsvorrichtung (22) verbunden ist, in einem vorbestimmten Drehgeschwindigkeitsbereich des Motors, welcher einem Drehgeschwindigkeitsbereich des Motors (12) niedriger als ein Geschwindigkeitsschwellenwert entspricht, wobei die Vorrichtung (10) von vorne nach hinten aufweist: das primäre Schwungrad (24), die koaxiale, zentrifugale Kopplungsvorrichtung (22) und das sekundäre, koaxiale Trägheitsschwungrad (20), welches eine Glocke bildet, die das primäre Schwungrad (24) umgibt, wobei die zentrifugale Kopplungsvorrichtung (22) radial ausdehnbare Mittel (34) aufweist, welche im Inneren der Glocke zwischen dem primären Schwungrad (24) und dem sekundären Schwungrad (20) angeordnet sind,
**dadurch gekennzeichnet, dass** die zentrifugale Kopplungsvorrichtung (22) eine Reibscheibe (36) aufweist, welche im Inneren des sekundären Schwungrads (20) montiert ist, welche in axialem Gleiten frei montiert ist und welche in Drehung mit dem sekundären Schwungrad (20) verbunden ist, welche axial eingeklemmt ist zwischen einer Reibfläche (42) des primären Schwungrads (24) und einer Reibfläche (44) einer axial beweglichen Platte (46), welche elastisch in Richtung zu dem primären Schwungrad (24) zurückgestellt ist und welche fähig ist, von ihrer eingeklemmten Stellung durch die ausdehnbaren Mittel (34) entfernt zu werden.

2. Vorrichtung (10) nach dem vorangegangenen Anspruch, **dadurch gekennzeichnet, dass** die bewegliche Platte (46) im Wesentlichen ringförmig ist und dass sie auf einer elastischen Membran (48) montiert ist, von der radiale, elastische Streifen (50) durch eine Nabe (52) getragen werden, die mit dem primären Schwungrad (24) verbunden ist, und fähig sind, axial durch die ausdehnbaren Mittel (34) unter einem sich Entfernen von dem primären Schwungrad (24) belastet zu werden, um die Platte (46) von ihrer Klemmstellung der Reibscheibe (36) zu entfernen.

3. Vorrichtung (10) nach dem vorangegangenen Anspruch, **dadurch gekennzeichnet, dass** die ausdehnbaren Mittel (34) eine Reihe von Kugeln (54) aufweisen, welche in radialen Aufnahmen (56) eines Käfigs (58) gefangen sind, der axial zwischen einer Abstützfläche (60) des primären Schwungrads (24) und den radialen Streifen (50) der elastischen Membran (48) montiert ist, und welche fähig sind, sich zwischen einer radialen Ruhestellung nahe der Achse (C) der Vorrichtung und einer radialen Zentrifugalstellung zu bewegen, in welcher sie fähig sind, wenn der Geschwindigkeitswert der Motordrehung größer als der Schwellenwert ist, sich radial in Richtung nach außen in ihren Aufnahmen (56) zu bewegen, um die elastischen Streifen (48) der Membran in Biegung zu belasten und somit axial die Platte (46) von ihrer Klemmstellung der Reibscheibe (36) zu entfernen.

4. Vorrichtung (10) nach einem der Ansprüche 1 bis 3, **dadurch gekennzeichnet, dass** die Reibflächen (42, 44) der beweglichen Platte (46) und des primären Schwungrads (24) mit einem Reibungsüberzug bedeckt sind.

## Claims

1. A device (10) adapted to reduce irregularities of the torque supplied by a thermal engine (12) of an automobile vehicle comprising on one hand, a primary flywheel (24) which is connected to the crankshaft (16) of the engine and drives a clutch (18) of the vehicle and, on the other hand, a secondary inertia flywheel (20), coaxial to the primary flywheel (24), which is connected to the crankshaft (16) by means of a centrifugal coupling device (22), in a predetermined range of speeds of rotation of the engine, which corresponds to a range of speeds of rotation of the engine (12) lower than a threshold speed value, the device (10) comprising, from upstream to downstream, the primary flywheel (24), the coaxial centrifugal coupling device (22) and the coaxial secondary inertia flywheel (20) which forms a bell surrounding the primary flywheel (24), the centrifugal coupling device (22) comprising radially expansible means (34) which are disposed inside the Dell between the primary flywheel (24) and the secondary flywheel (20), **characterised in that** the centrifugal coupling device (22) comprises a friction disc (36) which is mounted within the secondary flywheel (20), which is mounted to slide freely in an axial manner and is coupled in rotation to the secondary flywheel (20), which is gripped axially between a friction surface (42) of the primary flywheel (24) and a friction surface (44) of an axially moving plate (46) which is recalled elastically towards the primary flywheel (24), and which may be distanced from its gripped position by the expansible means (34).

2. A device (10) as claimed in the preceding claim, **characterised in that** the moving plate (46) is substantially annular and **in that** it is mounted on an elastic diaphragm (48) whose radial elastic arms (50) are borne by a hub (52) coupled to the primary flywheel (24) and can be urged axially by the expansible means (34) away from the primary flywheel (24) in order to distance the plate (46) from its position gripping the friction disc (36).

3. A device (10) as claimed in the preceding claim, **characterised in that** the expansible means (34) comprise a series of balls (54) which are held in radial housings (56) of a cage (58) mounted axially between a bearing surface (60) of the primary flywheel (24) and the radial arms (50) of the elastic diaphragm (48) and which may move between a radial rest position close to the axis (C) of the device and a radial centrifugation position in which they may, when the value of the speed of rotation of the engine is higher than the threshold value, be radially displaced outwardly in their housings (56) in order to urge the elastic arms (48) of the diaphragm to bend and thus axially to distance the plate (46) from its position gripping the friction disc (36).

4. A device (10) as claimed in one of claims 1 to 3, **characterised in that** the friction surfaces (42, 44) of the moving plate (46) and the primary flywheel (24) are covered with friction gaskets.
